# EUROPEAN PATENT APPLICATION

(11) **EP 2 110 305 A1**
(43) Date of publication of application: **21.10.2009**
(21) Application number: 08425261.8
(22) Date of filing: 17.04.2008
(51) Int. Cl.: B62M 9/12

(54) **Bicycle derailleur**

(71) Applicant: CAMPAGNOLO S.r.l., 36100 Vicenza (VI) (IT)
(72) Inventor: Pasqua, Paolo, 36043 Camisano Vincentino (Vicenza) (IT); Feltrin, Mauri, 36024 Nanto(Vincenza) (IT)
(74) Representative: Castiglia, Paolo

(57) **Abstract**

The invention concerns a bicycle derailleur, comprising a support member (102) intended to be mounted on a bicycle frame, a displacement member of a bicycle chain and at least one articulation arm (104) to connect in a mobile manner said displacement member to said support member (102), said at least one articulation arm (104) comprising a first coupling portion (104a) rotatably connected, about a respective rotation axis (X), to a respective second coupling portion (102a) of at least one member (102) between said support member and said displacement member through a respective articulation pin (106) extending along said rotation axis (X), one (104a) between said first coupling portion and said second coupling portion having opposite side coupling walls (126, 127) arranged in axially outer position with respect to the other coupling portion (102a), said pin (106) being axially locked with respect to said coupling portion (104a) having side walls (126, 127) arranged in axially outer position, said coupling portion (102a) which is axially inner to said side walls (126, 127) comprising opposite axial abutment surfaces (121, 122). Said articulation pin (106) comprises a portion (140) of predetermined axial length (L3) defined between at least one shoulder (145) and a reference section of the pin (106), said predetermined length (L3) being substantially equal to the axial length (L1) of the axially inner coupling portion (102a), and in that at least one (121) of the abutment surfaces of the axially inner coupling portion (102a) is in abutment with said at least one shoulder (145).

## Description

The present invention concerns a bicycle derailleur.

The invention also concerns a bicycle comprising the aforementioned derailleur. Preferably, the aforementioned bicycle is a racing bicycle.

As known, the bicycle is a mechanical means moved by muscular driving force that is transmitted to the rear "driving" wheel through a motion transmission system. It comprises a pair of crank arms, on which the cyclist exerts a propulsive thrust, one or more driving toothed wheels, made to rotate by direct coupling with the crank arms, and one or more driven toothed wheels or "sprockets", made to rotate by the driving toothed wheels through a chain, said sprockets being coupled with the hub of the rear wheel.

In particular, the racing bicycles comprise a plurality of sprockets of various diameters and a plurality of driving toothed wheels, also of various diameters. The chain simultaneously engages a driving toothed wheel and a sprocket and can be selectively displaced on them through a front derailleur and a rear derailleur, so as to obtain the combination of driving toothed wheel and sprocket that offers the transmission ratio most favourable to the course conditions.

The front derailleur is mounted on the seat post tube of the bicycle frame near to the plurality of driving toothed wheels and moves the chain from one driving toothed wheel to another. The rear derailleur is mounted on a portion of the bicycle frame near to the plurality of sprockets and moves the chain from one sprocket to another.

In the prior art, front and rear derailleurs are made according to an articulated parallelogram mechanism in which the sides of the parallelogram are articulated in pairs along respective substantially parallel rotation axes through pins. In particular, such an articulated parallelogram is formed by a support member, intended to remain fixed with respect to the frame, a displacement member of the chain over the toothed wheels (the cogwheels of the crankset, in the case of front derailleur, or the sprockets of the sprocket assembly, in the case of rear derailleur), and a pair of articulation arms or connecting rods (generally identified as outer connecting rod and inner connecting rod), to connect in a mobile manner the displacement member of the chain to the support member. In the case of front derailleur, the displacement member comprises a so-called cage or "chain guide", whereas in the case of rear derailleur, the displacement member comprises a rocker arm.

Each articulation arm is rotatably connected to the support member and to the displacement member through respective articulation pins inserted in respective holes.

US 5,456,637 shows a bicycle derailleur in which the articulations of the aforementioned articulated parallelogram comprise cylindrical pins, equipped with a widened head. Each pin crosses two pairs of aligned holes, a first pair being made at a respective end of a respective articulation arm and a second pair being made on the support member or on the displacement member of the articulated parallelogram. The coupling end of the support member or of the displacement member is fork-shaped; in the coupling condition, therefore, a portion of the end of the support member or of the displacement member is arranged in an axially outer position with respect to the end of the articulation arm. Once the pin is inserted into the aligned holes of the aforementioned two pairs of holes, it is normally caulked on the side opposite the head, to make an abutment edge that prevents it from coming out.

The Applicant has found that the bicycle derailleurs just described have the drawback that, due to the axial clearances existing at the coupling ends of the four sides of the articulated parallelogram, it is not ensured a correct mutual axial positioning of such sides during the gearshifting. This causes an imprecise positioning of the chain above the selected sprocket or driving toothed wheel and, therefore, gearshifting that is not sufficiently precise.

In particular, the Applicant has found the presence of significant axial clearances at the pins of the articulated parallelogram, between the end portions of the articulation arms and the support member or, respectively, the displacement member of the chain. Such clearances determine a slowing down of the gearshifting times (i.e. the derailleur is not very "reactive") and an unsatisfactory precision of positioning of the chain above the selected sprocket or driving toothed wheel.

Moreover, the presence of the aforementioned clearances determines a worsening of the phenomena of wear to which the components of the articulated parallelogram are subjected, due to the relative sliding of the components themselves.

The technical problem at the basis of the present invention is to provide a bicycle derailleur with high reliability and precision of gearshifting, so as to overcome the aforementioned drawbacks with reference to the prior art in a simple and effective manner.

The present invention therefore concerns, in a first aspect thereof, a bicycle derailleur, comprising a support member intended to be mounted on a bicycle frame, a displacement member of a bicycle chain and at least one articulation arm to connect in a mobile manner the displacement member to said support member, the aforementioned at least one articulation arm comprising a first coupling portion rotatably connected, about a respective rotation axis, to a respective second coupling portion of at least one member between the support member and the displacement member through a respective articulation pin extending along the rotation axis, one between the first coupling portion and the second coupling portion being arranged in axially inner position with respect to opposite side coupling walls of the other coupling portion, the pin being axially locked with respect to said side coupling walls, the axially inner coupling portion comprising opposite axial abutment surfaces, **characterised in that** the articulation pin comprises a portion of predetermined axial length defined between at least one shoulder of the pin and a reference section of the pin, the predetermined axial length being substantially equal to the axial length of the axially inner coupling portion, and in that at least one of the abutment surfaces of the axially inner coupling portion is in abutment with the aforementioned at least one shoulder.

In the rest of the present description and in the following claims, by the expression "substantially equal" referred to the aforementioned predetermined axial length it is meant that such a predetermined axial length is perfectly equal to, or slightly greater than, the axial length of the axially inner coupling portion, with a difference of a few hundredths of a millimetre, for example less than or equal to 0.05 mm.

Hereafter it will be often used the expression "axially outer coupling portion" of the articulation arm (or of one between the support member and the displacement member of the chain) to indicate the coupling portion having opposite side walls arranged in axially outer position with respect to the side walls of the coupling portion of the support member or of the displacement member of the chain (or of the articulation arm). This last coupling portion will on the other hand be indicated with the expression "axially inner coupling portion".

Advantageously, the bicycle derailleur according to the invention ensures, in a constructively simple and cost-effective manner, a high precision of gearshifting since the axial clearances at the pins of the articulated parallelogram are greatly reduced. Indeed, the axially inner coupling portion is axially locked with respect to the pin, and the pin is in turn axially locked with respect to the axially outer coupling portion, so that, all things considered, the axially inner coupling portion is axially locked with respect to the axially outer coupling portion.

The predetermined axial length of the aforementioned pin portion defined between the shoulder of the pin and the aforementioned reference section of the pin can be made to measure by turning and therefore with greater precision and cost-effectiveness compared to the prior art, in which it is necessary to make the axially outer coupling portion to measure.

In a first preferred embodiment of the derailleur of the present invention, the reference section is taken at an axially inner surface of one of the aforementioned side walls, the other abutment surface of the axially inner coupling portion being in abutment on the aforementioned axially inner surface.

In this way, advantageously, the axially inner coupling portion goes into abutment on one side on a shoulder of the pin and on the other side on an inner surface of the axially outer coupling portion, so that the axially inner coupling portion is axially locked with respect to the axially outer coupling portion.

The predetermined axial length of the aforementioned pin portion defined between the shoulder of the pin and the aforementioned reference section of the pin is in this case made to measure by making the shoulder at a predetermined axial length from the free end of the pin once the thickness of the side wall of the axially outer coupling portion and the axial length of the axially inner coupling portion are known.

Preferably, the aforementioned axially inner surface is defined on a metallic insert integrally associated to a hole formed in the side wall. This is particularly advantageous in the case in which the axially outer coupling portion is made from composite material, so as to make a precise coupling between pin and axially outer coupling portion.

Preferably, in order to simplify the mounting of the derailleur of the invention, the aforementioned metallic insert is integrally associated to the aforementioned hole through interference or gluing. Obviously, it is possible to provide other forms of coupling, like for example through threading or snap connection.

In a preferred embodiment of the derailleur according to the invention, the portion of predetermined axial length of the pin has substantially cylindrical shape with diameter that is greater than, or equal to, that of a first substantially cylindrical end portion of said pin and less than that of a second substantially cylindrical end portion of the pin opposite to the first end portion.

In this case, preferably, the aforementioned first end portion of the pin is integrally associated to the aforementioned side wall through interference or gluing, or alternatively through screwing of corresponding threaded surfaces.

In a second preferred embodiment of the derailleur according to the invention, the aforementioned reference section is taken at a second shoulder of the pin, the other abutment surface of the axially inner coupling portion being in abutment on such a second shoulder of the pin.

In this way, advantageously, the axially inner coupling portion goes into abutment on one side on a first shoulder of the pin and on the other side on a second shoulder of the pin, so that the axially inner coupling portion is axially locked with respect to the axially outer coupling portion.

The predetermined axial length of the aforementioned pin portion defined between the shoulder of the pin and the aforementioned reference section of the pin is in this case made to measure by making the two shoulders at a predetermined axial length from one another equal to the axial length of the axially inner coupling portion.

In this case, preferably, the portion of predetermined axial length has substantially cylindrical shape with diameter smaller than that of a first substantially cylindrical end portion of the pin and than that of an opposite second substantially cylindrical end portion of the pin.

In any case, preferably, the aforementioned shoulders are defined by a respective annular surface which is substantially flat and perpendicular to the rotation axis of said pin.

In order to reduce the frictions in the operation of the derailleur, the derailleur according to the invention preferably comprises an annular brass integrally associated inside a through hole formed in the axially inner coupling portion, the portion of predetermined axial length of the pin being housed in such an annular brass.

In a further preferred embodiment of the derailleur according to the invention, the pin described above is defined by at least two pin elements, integrally associated with one another at respective portions of free end.

Preferably, in order to simplify the mounting, such at least two pin elements are associated through screwing of corresponding threaded surfaces defined on the respective end portions.

In a further preferred embodiment of the derailleur according to the invention, the pin described above comprises a longitudinal through hole of lightening.

Preferably, the axially outer coupling portion is made from composite material comprising structural fibres, granules or powders incorporated in a matrix of polymeric material. Such a material advantageously ensures desired characteristics of lightness and structural strength.

In a second aspect thereof, the present invention concerns a bicycle comprising a derailleur of the type described above.

Preferably, ' such a bicycle has, individually or in combination, all of the structural' and functional characteristics discussed above with reference to the aforementioned derailleur and therefore it has all of the aforementioned advantages.

Further characteristics and advantages of the present invention shall become clearer from the following detailed description of some preferred embodiments thereof, made with reference to the attached drawings and given for indicating and not limiting purposes. In such drawings:
- figure 1 schematically represents a perspective view of a rear derailleur according to the present invention;
- figure 2 schematically represents an exploded view of the derailleur of figure 1;
- figure 3 schematically represents a section view of the derailleur of figure 1, taken according to the plane having trace III - III of figure 1;
- figures 3A and 3B show enlarged details of the view of figure 3;
- figures 4 and 5 schematically represent further embodiments of the derailleur according to the present invention, in respective views analogous to those of figure 3;
- figure 6 schematically represents a plan view of a detail of the derailleur of figure 1;
- figure 7 schematically represents a section view of the detail of figure 6, taken according to the plane having trace IV - IV of figure 6;
- figures 8 and 9 schematically represent further embodiments of a detail of the derailleur according to the present invention, in respective views analogous to those of figure 6;
- figure 10 schematically represents a perspective view of a further embodiment of a rear derailleur according to the present invention;
- figure 11 schematically represents a plan view of a detail of the derailleur of figure 10;
- figure 12 schematically represents a perspective view of the detail of figure 11.

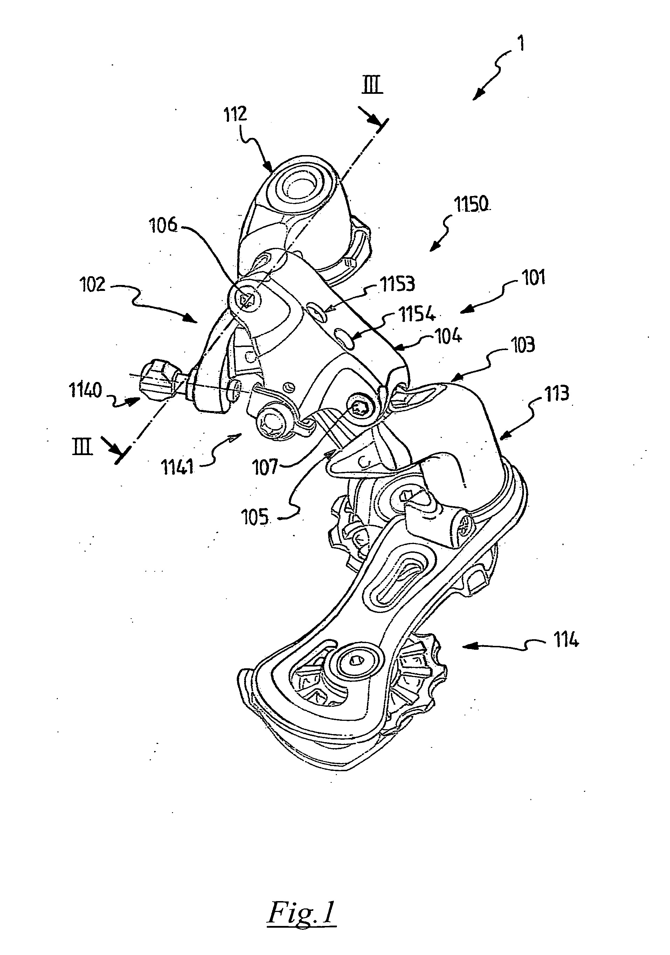

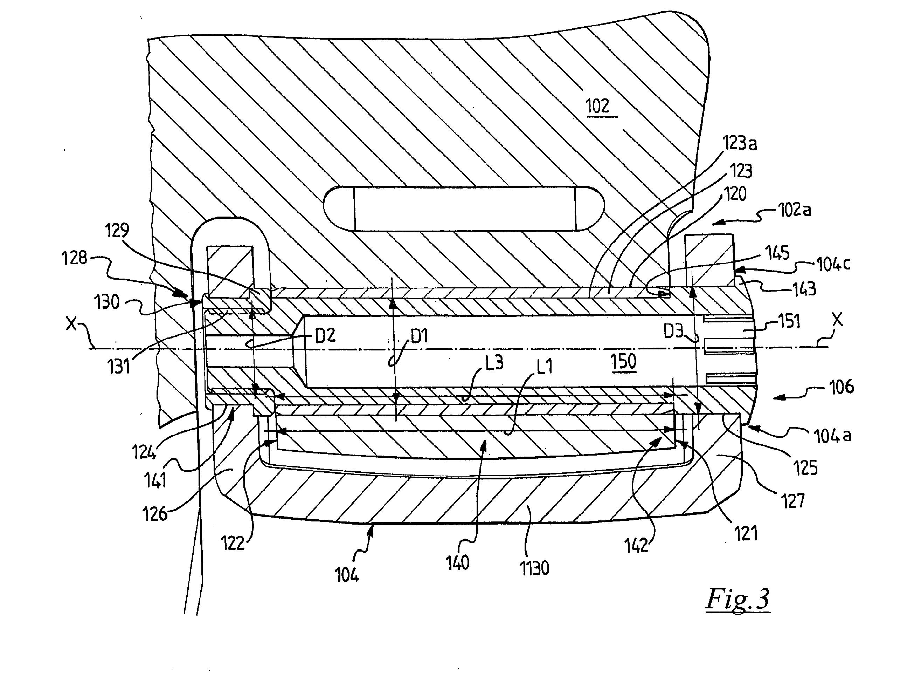

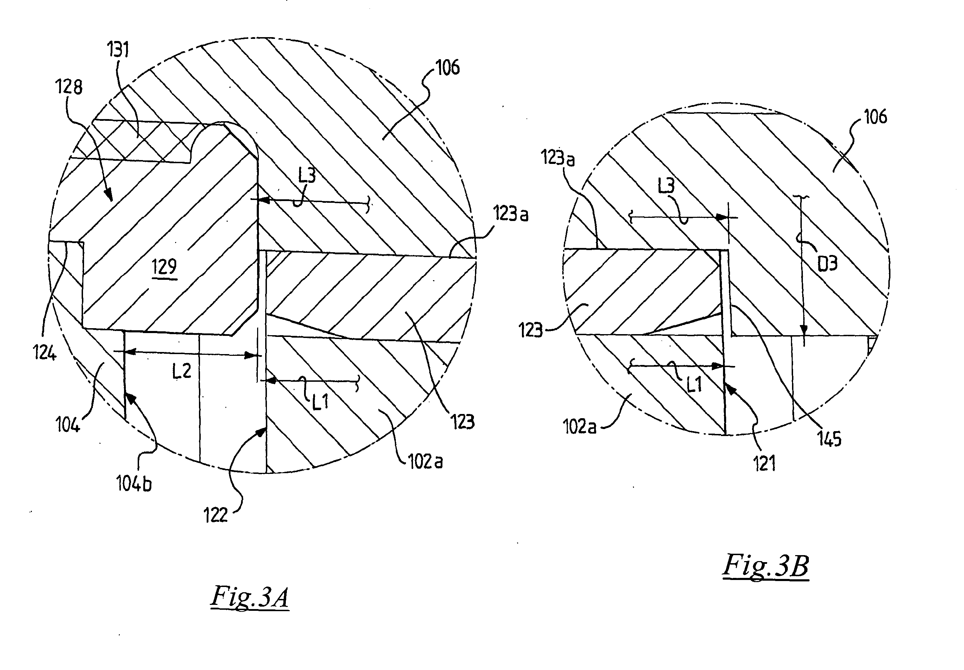

With initial reference to figures 1-3, 3A and 3B, a first embodiment of a bicycle derailleur in accordance with the present invention is shown. Such a derailleur is globally indicated with 1. More specifically, a rear derailleur is shown.

The following description is made with reference to the non-limiting case of the rear derailleur; however, it can, mutatis mutandis, also refer to a front derailleur having analogous articulated parallelogram configuration.

The rear derailleur 1 comprises an articulated quadrilateral driving mechanism 101, more precisely an articulated parallelogram driving mechanism, intended to be moved by a control cable (Bowden cable) actuated by the cyclist. Alternatively, the articulated parallelogram could be moved by an actuator with an electric motor.

The mechanism 101 comprises, at the four sides of the parallelogram, four respective connecting rods 102, 103, 104 and 105, which are articulated with one another - about respective rotation axes - by four articulation pins 106, 107, 108 and 109.

The first connecting rod 102 is a support member of the derailleur. Such a connecting rod is intended to be mounted on a bicycle frame at a fixing portion 112 thereof.

The second connecting rod 103, opposite the first connecting rod 102, is a displacement member of a bicycle chain. Such a connecting rod 103 comprises a fixing portion 113 to a rocker arm 114 associated to such a displacement member. In the case of front derailleur, the displacement member comprises a so-called cage or "chain guide", in place of the rocker arm 114.

The third connecting rod 104 and the fourth connecting rod 105 are articulation arms to connect in a mobile manner the displacement member of the chain 103 to the support member 102.

The fourth connecting rod 105 is also identified as "inner connecting rod" since it is the one that in use faces the bicycle frame, whereas the third connecting rod 104 is also identified as "outer connecting rod" since it is the one that in use faces the outer environment, i.e. the opposite side with respect to the bicycle frame.

The first pin 106 connects the first connecting rod 102 and the third connecting rod 104, the second pin 107 connects the second connecting rod 103 and the third connecting rod 104, the third pin 108 connects the first connecting rod 102 and the fourth connecting rod 105 and the fourth pin 109 connects the second connecting rod 103 and the fourth connecting rod 105.

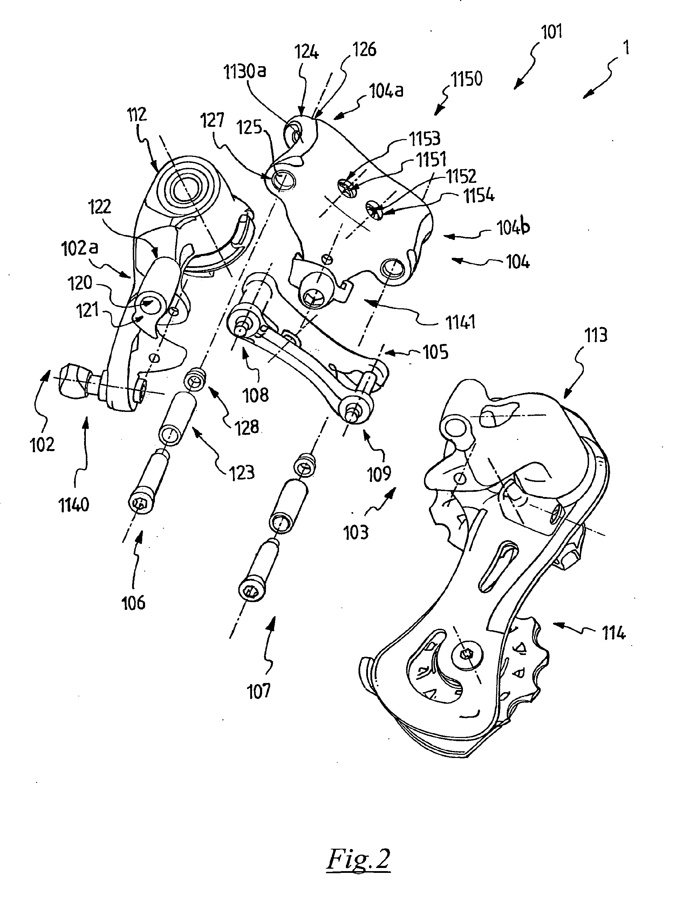

Preferably, the first pin 106 and the second pin 107 are the same as one another, just like the third pin 108 and the fourth pin 109. In the case illustrated in figures 1 and 2, however, the third pin 108 and the fourth pin 109 are of known type, the description of which has been quoted above in relation to prior art document US 5,456,637.

As far as the connection of the Bowden cable to the derailleur 1 is concerned, it is of conventional type. In particular, the first connecting rod 102 comprises a portion 1140 for receiving the outer sheath of the Bowden cable, whereas the third connecting rod 104 comprises a connection portion 1141 of the inner cable of the Bowden cable.

The derailleur comprises conventional means of stop adjustment 1150. Such means comprise two screws 1151, 1152 inserted into respective holes 1153, 1154 formed in the third connecting rod 104.

The section of figure 3 is made at the first pin 106 that connects the first connecting rod 102 and the third connecting rod 104.

In particular, the third connecting rod 104 comprises a coupling portion 104a that has, in a cross section thereof passing through the rotation axis X-X of the pin, a U-shape.

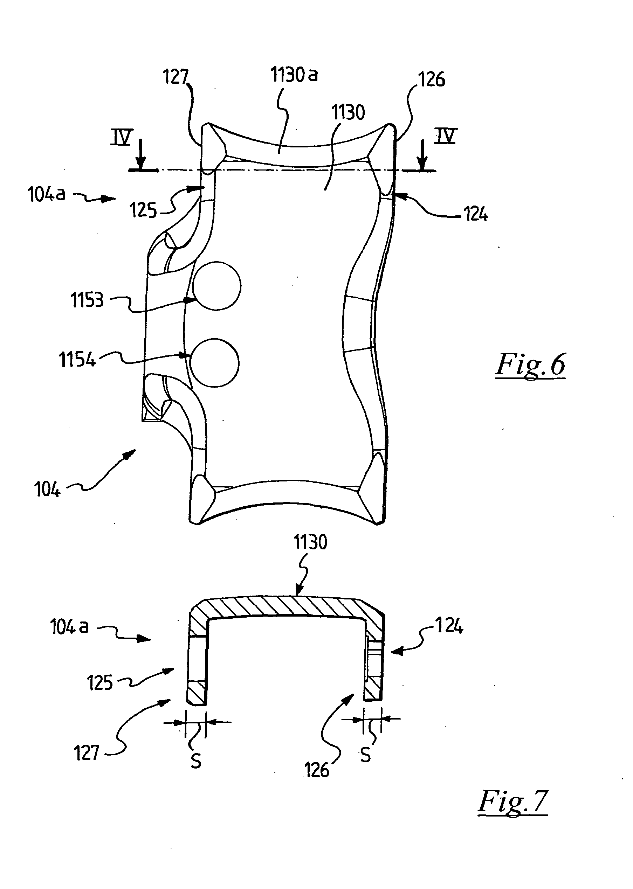

As illustrated in figures 6 and 7, the coupling portion 104a has side coupling walls 126 and 127 that extend from a bottom wall 1130 in turn extending, along the longitudinal direction of the third connecting rod 104, until at the pin 106. In this way, the third connecting rod 104 has, in a cross section passing through the rotation axis X-X of the pin (figure 7), a substantially U-shape.

Preferably, the bottom wall 1130 extends, along the longitudinal direction of the third connecting rod 104, until it goes beyond the pin 106 and has a curved end portion 1130a, with centre of curvature on the side of the articulation pin.

In this way, the bottom wall 1130 substantially covers or partially wraps the coupling portion 102a of the first connecting rod 102, and therefore the articulation pin 106. Preferably, the bottom wall 1130 substantially covers or partially wraps the coupling portion 102a for a tract of angular width equal to at least 60°.

In alternative embodiments of the present invention it is possible to provide, vice-versa, that the coupling portion of the first connecting rod 102 partially "wraps" the coupling portion of the third connecting rod 104.

The special conformation of the coupling portion 104a of the third connecting rod 104 gives the coupling portion itself a particular rigidity. The thickness S of the side walls 126 and 127 can be less than that of the corresponding side walls of the coupling portions of the connecting rods of the derailleurs of the prior art, in this way advantageously reducing the lateral dimensions of the derailleur itself at the pin 106.

Moreover, the "wrapping" conformation of the coupling portion 104a of the third connecting rod 104 is such as to protect the articulation pin 106 from contaminating agents, like dust or mud.

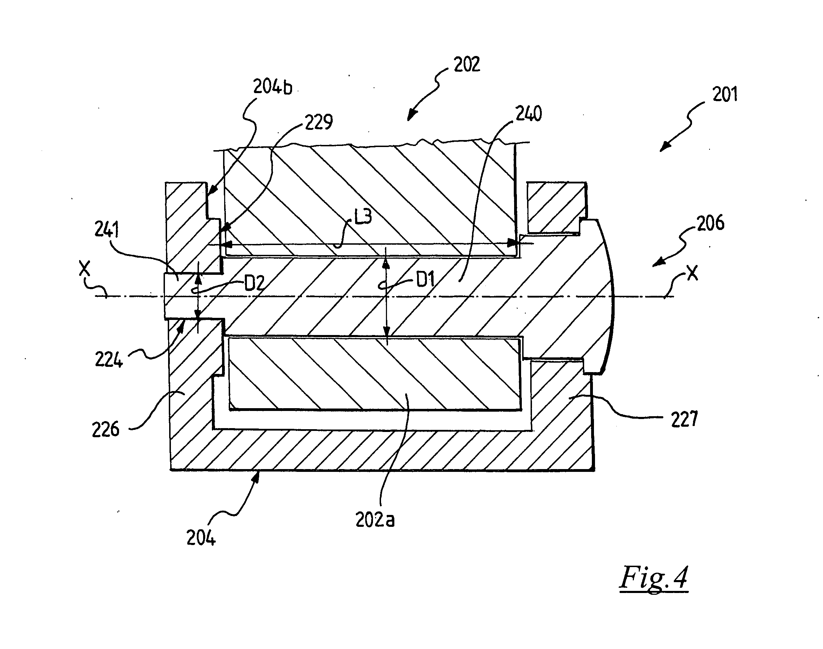

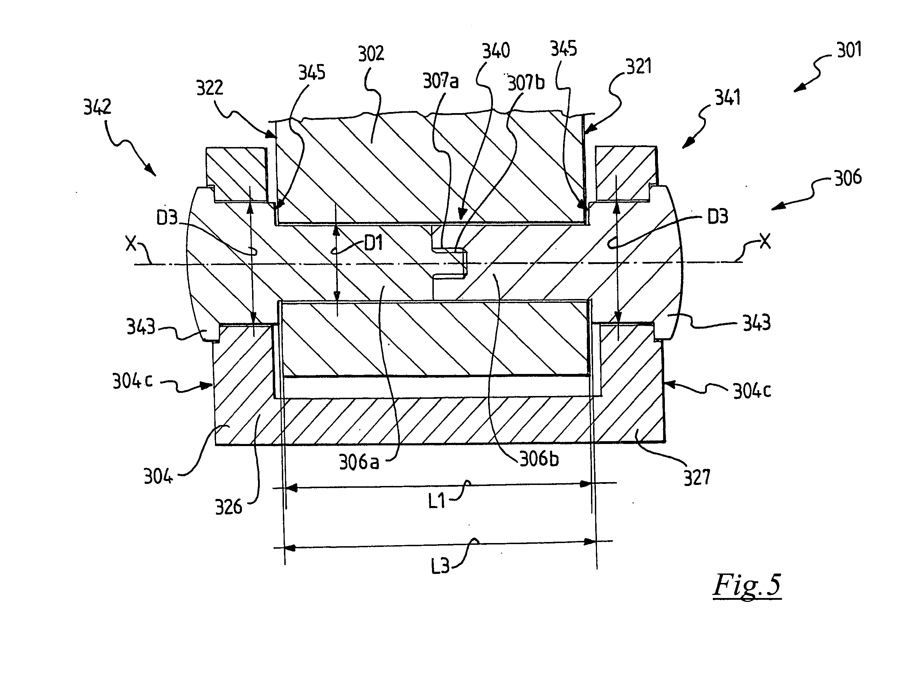

The coupling portion 102a of the first connecting rod 102 has a through hole 120 intended to house the articulation pin 106. The coupling portion 102a is delimited by two surfaces 121 and 122 of axial abutment, substantially flat and parallel, as well as substantially perpendicular to the rotation axis X-X of the pin 106, such surfaces 121 and 122 being spaced one another apart by a distance L1. Inside the through hole 120 of the first connecting rod 102 an annular brass 123 is positioned, integral to it and adapted to reduce the frictions during the moving of the articulated parallelogram. In further embodiments of the derailleur of the invention (for example in those of figures 4 and 5 that shall be described later on) such a brass could be omitted.

In a further embodiment of the derailleur of the invention, the coupling portion 102a of the first connecting rod 102, instead of having a single through hole 120, as illustrated in figures 1-3, could have a fork-shape, too, i.e. could comprise a pair of side portions or ears, where respective holes are made that are aligned with each other.

The coupling portion 104a of the third connecting rod 104, as stated, has a substantially U-shaped cross section and comprises two coaxial through holes 124 and 125, formed in the opposite side walls 126 and 127.

The opposite coupling portion 104b of the third connecting rod 104, which is pivoted to the second connecting rod 103 through the articulation pin 107, is shaped and sized in analogous way to the coupling portion 104a.

In the hole 124, a metallic insert 128 is positioned, for example made from aluminium alloy or from steel.

The metallic insert 128 is locked in the hole 124, for example through gluing or mechanical interference or with other equivalent locking means.

The use of such a metallic insert 128 is particularly advantageous in embodiments in which the third connecting rod 104 is made from composite material.

By composite material it is meant a material consisting of at least two components including a polymeric matrix and a filler for example comprising structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, this does not rule out the possibility of using a thermoplastic material.

In alternative embodiments of the invention, the connecting rod 104 is made from metal. In this case, the metallic insert 128 could be omitted (as occurs, for example, in the embodiments of the derailleur of the invention illustrated in figures 4 and 5 described later on).

The metallic insert 128 housed in the hole 124 of the third connecting rod 104 comprises an axially inner edge 129, directed towards the coupling portion 102a of the first connecting rod 102, such an edge 129 projecting of a distance L2 from an inner surface 104b of the third connecting rod 104 (figure 3A). The metallic insert 128 also comprises an opposite axially outer edge 130 of locking (made for example by caulking) and a threaded through hole 131. The outer locking edge 130 could not be present if the locking of the metallic insert 128 were carried out through other retention means, like for example through gluing or by mechanical interference.

The pin 106 has a portion 140 of predetermined axial length L3 and of diameter D1, which is housed in the through hole 123a of the brass 123. The length value L3 of the portion 140 of the articulation pin 106 is slightly greater than the distance L1 between the surfaces 121 and 122 of axial abutment of the coupling portion 102a of the first connecting rod 102, with a difference of a few hundredths of millimetre, for example less than or equal to 0.05 mm. Such a slight difference in size can be seen in the details of figures 3A and 3B.

The pin 106 also has, at a first end thereof, a substantially cylindrical portion 141, having a diameter D2 smaller than D1 and externally threaded, which engages in the threaded hole 131 of the metallic insert 128. At the other end the pin 106 has a substantially cylindrical portion 142, having a diameter D3 greater than D1, which ends in an abutment edge 143 that rests on an outer surface 104c of the side wall 127 of the third connecting rod 104. Between the portion 140 of the pin 106 and the portion 142 of diameter D3 a shoulder 145 is defined, comprising a annular surface which is substantially flat and perpendicular to the rotation axis of the pin (figure 3B).

The length L3 that, as stated, is slightly greater than the distance L1 between the surfaces 121 and 122 of the coupling portion 102a of the first connecting rod 102, allows the coupling portion 102a of the first connecting rod 102 itself to be confined between the axially inner edge 129 of the metallic insert 128 (figure 3A) and the shoulder 145 (which therefore acts as containment edge) of the pin 106 (figure 3B), with axial clearances of extremely low value. Indeed, the possibility of making precise processings of the pin 106, for example through turning processings on a semi-processed product made from steel, makes it possible to obtain the portion 140 of desired length L3 and diameter D1 with extremely low tolerance values, of the order of three hundredths of millimetre, for which reason the axial clearances between the components shown in figures 3A and 3B can be contained to such extremely low values.

The pin 106 also has a through hole 150 of lightening and a shaped seat 151 to receive a suitable screwing tool, for example an allen spanner. Alternatively, the pin could be "full" (like, for example, in the embodiments of the derailleur of the invention illustrated in figures 4 and 5 described later on).

Figure 4 shows a second embodiment of the bicycle derailleur of the invention. In such a figure 4, to structural elements that are identical or equivalent from the functional point of view to those of the derailleur 1 described above with reference to figures 1-3, 3A and 3B the same reference numerals increased by 100 shall be attributed and they shall not be described any further.

In particular, this second embodiment of the derailleur of the invention, now indicated with 201, differs from the first embodiment of the derailleur 1 in that the metallic insert 128 is not present. The abutment edge 229 for the coupling portion 202a of the first connecting rod 202 is made directly by processing on the inner surface 204b of the side wall 226 of the third connecting rod 204. The brass 123 is omitted, too.

Moreover, the pin 206 is full (i.e. it does not have a through hole of lightening) and it has, at a first end thereof, a substantially cylindrical portion 241, having diameter D2 smaller than the diameter D1 of the portion 240 of predetermined axial length L3. The locking of the portion 241 of the pin 206 in the hole 224 of the side wall 226 of the third connecting rod 204 is carried out by mechanical interference.

Figure 5 shows a third embodiment of the bicycle derailleur of the invention. In such a figure 5, to structural elements that are identical or equivalent from the functional point of view to those of the derailleur 1 described above with reference to figures 1-3, 3A and 3B the same reference numerals increased by 200 shall be attributed and they shall not be described any further.

In particular, this third embodiment of the derailleur of the invention, now indicated with 301, differs from the first embodiment of the derailleur 1 in that the pin 306 is made in two "full" pin elements 306a and 306b (i.e. without a through hole of lightening). The two pin elements 306a and 306b are substantially symmetrical and are associated at respective portions of free end, through screwing of corresponding threaded surfaces 307a, 307b.

The pin 306, once the two pin elements 306a and 306b have been associated, has a substantially cylindrical central portion 340, of predetermined axial length L3 and of diameter D1. The end portions 341 and 342 of the pin 306 are symmetrical to each other and have substantially cylindrical shape of diameter D3 greater than D1. They comprise a respective widened head that defines a respective abutment edge 343, which rests on an outer surface 304c of the side walls 326 and 327 of the third connecting rod 304.

The values of the sizes D1, D3, L1 and L3 correspond to those defined above for the first embodiment of the derailleur of the invention.

Between the portion 340 of the pin 306 and the portions 341 and 342 of diameter D3 two respective shoulders or containment edges 345 are defined.

The length L3 that, as stated, is substantially equal to the distance L1 between the surfaces of axial abutment 321 and 322 of the coupling portion 302a of the first connecting rod 302, allows the coupling portion 302a of the first connecting rod 302 itself to be confined between the two opposite shoulders 345, with clearances of extremely low value.

For such an embodiment, the mounting provides the alignment of the holes of the first and of the third connecting rod 302 and 304 and then the insertion of the two pin elements 306a and 306b from the outside, which are then made integral through the mutual screwing of the respective portions of free end.

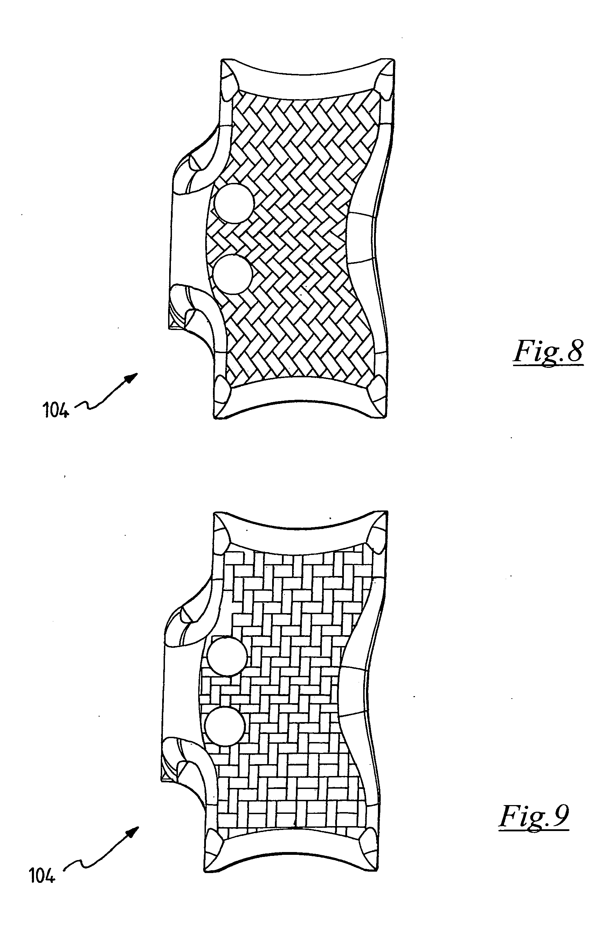

Figure 8 schematically shows an embodiment of the third connecting rod 104 in which it is made from composite material consisting of a fabric of structural fibres (for example carbon fibres) incorporated in a matrix of polymeric material (epoxy resin). The structural fibres (which involve all the body of the third connecting rod itself) are crossed according to angles substantially at 45° with respect to the longitudinal extension of the third connecting rod itself (orientation of 45° positive for the weft, and orientation of 45° negative for the warp).

In a further embodiment of the third connecting rod 104 of the derailleur according to the invention, shown in figure 9, the fibres of the weft and of the warp are orientated according to 0° and 90° with respect to the longitudinal extension of the third connecting rod 104.

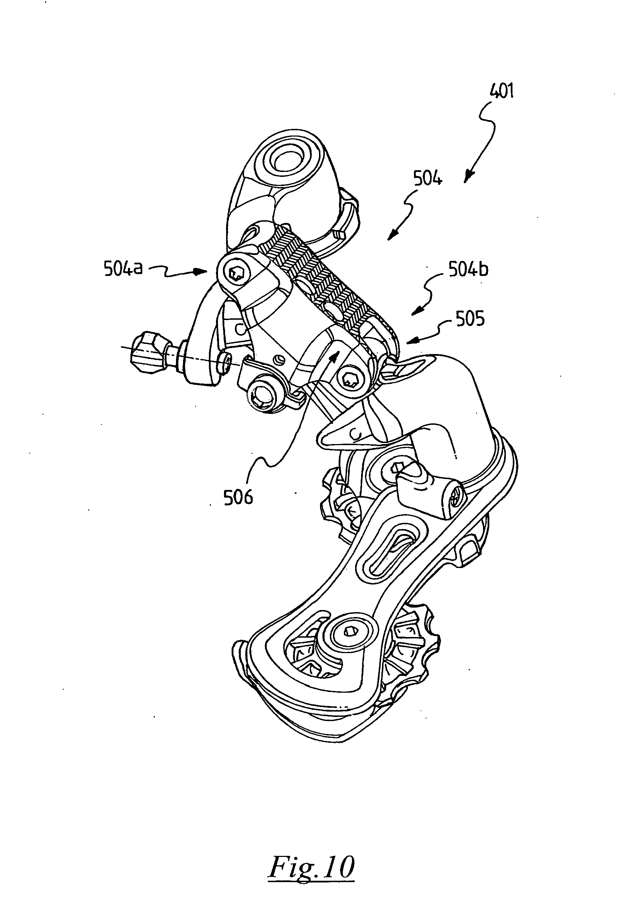

Figures 10-12 show a further embodiment of the derailleur of the invention. In such figures, to structural elements that are identical or equivalent from the functional point of view to those of the derailleur 1 described above with reference to figures 1-3 the same reference numerals increased by 400 shall be attributed and they shall not be described any further.

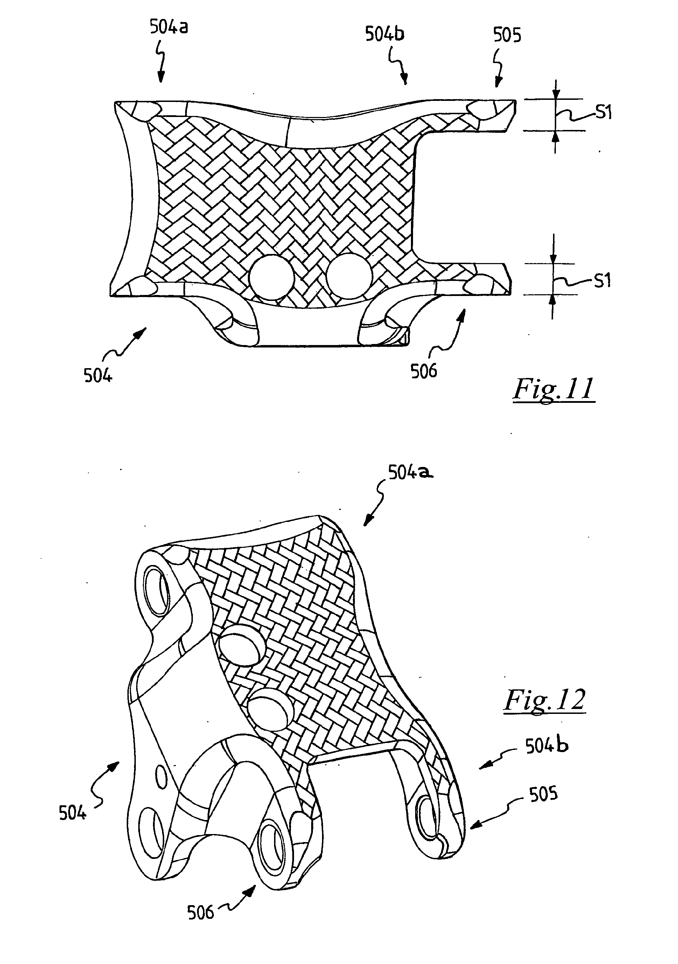

In particular, this third embodiment of the derailleur of the invention, now indicated with 401, differs from the first embodiment of the derailleur 1 in that the outer third connecting rod 504 has, in proximity to its second coupling portion 504b, a conventional-type shape, with second side walls 505 and 506, that, in a longitudinal section of the connecting rod 504, define a substantially forked shape. The side walls 505 and 506 have a thickness S1 (figure 11) that is greater than the thickness S of the side walls of the corresponding coupling portion of the derailleur 1 of figure 1.

Although the invention has been described and illustrated with reference just to the articulations between the first connecting rod 102 and the third connecting rod 104, and between the third connecting rod 104 and the second connecting rod 103, it can be applied to the articulations between the first connecting rod 102 and the fourth connecting rod 105, and between the fourth connecting rod 105 and the second connecting rod 103.

Of course, a man skilled in the art can bring numerous modifications and variants to the bicycle derailleur described above, in order to satisfy specific and contingent requirements, all of which are in any case covered by the scope of protection of the present invention as defined by the following claims.

## Claims

1. Bicycle derailleur (1), comprising a support member (102) intended to be mounted on a bicycle frame, a displacement member (103) of a bicycle chain and at least one articulation arm (104, 105, 204, 304) to connect in a mobile manner said displacement member (103) to said support member (102, 202, 302), said at least one articulation arm (104, 105, 204, 304) comprising a first coupling portion (104a, 204a, 304a) rotatably connected, about a respective rotation axis (X), to a respective second coupling portion (102a, 202a, 302a) of at least one member between said support member (102, 202, 302) and said displacement member (103) through a respective articulation pin (106, 107, 206, 306) extending along said rotation axis (X), one between said first coupling portion (104a, 204a, 304a) and said second coupling portion (102a, 202a, 302a) being arranged in axially inner position with respect to opposite side coupling walls (126, 127, 226, 227, 326, 327) of the other coupling portion, said pin (106, 107, 206, 306) being axially locked with respect to said side coupling walls (126, 127, 226, 227, 326, 327), said axially inner coupling portion (102a, 202a, 302a) comprising opposite axial abutment surfaces (121, 122, 221, 222, 321, 322), **characterised in that** said articulation pin (126, 127, 226, 227, 326, 327) comprises a portion (140, 240, 340) of predetermined axial length (L3) defined between at least one shoulder (145, 345) of the pin (126, 127, 226, 227, 326, 327) and a reference section of the pin (126, 127, 226, 227, 326, 327), said predetermined axial length (L3) being substantially equal to the axial length (L1) of said axially inner coupling portion (102a, 202a, 302a), and **in that** at least one of the axial abutment surfaces (121, 122, 221, 222, 321, 322) of said axially inner coupling portion (102a, 202a, 302a) is in abutment with said at least one shoulder (145, 345).

2. Derailleur (1) according to claim 1, wherein said reference section is taken at an axially inner surface of one of said side walls (126, 127, 226, 227, 326, 327), the other axial abutment surface (121, 122, 221, 222, 321, 322) of the axially inner coupling portion (102a, 202a, 302a) being in abutment on said axially inner surface.

3. Derailleur (1) according to claim 2, wherein said axially inner surface of said side wall (126) is defined on a metallic insert (128) integrally associated to a hole formed in said side wall (126).

4. Derailleur (1) according to claim 3, wherein said metallic insert (128) is integrally associated to said hole through interference or gluing.

5. Derailleur (1) according to any one of claims 2 to 4, wherein said portion (140), of predetermined axial length (L3) has substantially cylindrical shape with diameter (D1) greater than, or equal to, that (D2) of a first substantially cylindrical end portion of said pin (106, 206) and less than that (D3) of a second substantially cylindrical end portion of said pin (106, 206) opposite to said first end portion.

6. Derailleur (1) according to claim 5, wherein said first end portion of said pin (206) is integrally associated to said side wall (226) through interference or gluing.

7. Derailleur (1) according to claim 5, wherein said first end portion of said pin (106) is integrally associated to said side wall (126) through screwing of corresponding threaded surfaces.

8. Derailleur (1) according to claim 1, wherein said reference section is taken at a second shoulder (345) of said pin (106, 306), the other surface of axial abutment of the axially inner coupling portion (102a) being in abutment on said second shoulder (345) of said pin (106, 306).

9. Derailleur (1) according to claim 8, wherein said portion (340) of predetermined axial length (L3) has substantially cylindrical shape with diameter (D1) smaller than that (D3) of a first substantially cylindrical end portion of said pin (306) and than that (D3) of an opposite second substantially cylindrical end portion of said pin (306).

10. Derailleur (1) according to any one of the previous claims, wherein said at least one shoulder (145, 345) is defined by a annular surface which is substantially flat and perpendicular to the rotation axis (X) of said pin (106, 107, 206, 306).

11. Derailleur (1) according to any one of the previous claims, comprising an annular brass (123) integrally associated inside a through hole formed in the axially inner coupling portion (102a), said portion (140) of predetermined axial length (L3) being housed in said annular brass (123).

12. Derailleur (1) according to any one of the previous claims, wherein said pin (306) is defined by at least two pin elements (306a, 306b), integrally associated with one another at respective portions of free end.

13. Derailleur (1) according to claim 12, wherein said at least two pin elements (306a, 306b) are associated through screwing of corresponding threaded surfaces (307a, 307b) defined on the respective end portions.

14. Derailleur (1) according to any one of the previous claims, wherein said pin (106) comprises a longitudinal through hole (150) of lightening.

15. Derailleur (1) according to any one of the previous claims, wherein at least the coupling portion (104a, 204a, 304a) having opposite side walls (126, 127, 226, 227, 326, 327) arranged in axially outer position is made from composite material comprising structural fibres, granules or powders incorporated in a matrix of polymeric material.

16. Bicycle comprising a derailleur (1) according to any one of the previous claims.
